# EUROPEAN PATENT APPLICATION

(11) **EP 1 608 109 A1**
(43) Date of publication of application: **21.12.2005**
(21) Application number: 03710413.0
(22) Date of filing: 18.03.2003
(51) Int. Cl.: H04L 12/56

(54) **TRANSMISSION BAND ASSIGNING DEVICE**

(71) Applicant: FUJITSU LIMITED, Kawasaki-shi, Kanagawa 211-8588 (JP)
(72) Inventor: TANAKA, Atsuya, c/o FUJITSU LIMITED, Kawasaki-shi, Kanagawa 211-8588 (JP); TAJIMA, Yoshiharu, c/o FUJITSU LIMITED, Kawasaki-shi, Kanagaw a 211-8588 (JP)
(74) Representative: HOFFMANN EITLE
(86) International application number: PCT/JP2003/003243
(87) International publication number: WO 2004/084505

(57) **Abstract**

The present invention relates to a transmission band allocating device which effectively and freely allocates a band used for each packet transmission in a packet wireless transmission system. It is an object of the present invention to fairly provide a service to terminals and to enhance the throughput at the same time. To this end, the transmission band allocating device according to the present invention is configured by modifying a maximum CIR method such that a band is preferentially allocated to a terminal having precedently allocated a band whose integrated value is small.

## Description

### Technical Field

The present invention relates to a transmission band allocating device which allocates efficiently and flexibly a band for a packet transmission in a wireless transmission system in which transmission data is transmitted in packets.

### Background Art

A mobile communication system to which a broadband CDMA (Code Division Multiple Access) technique is applied can provide a packet transmission service at a speed of hundreds of kilobits per second.

However, as regards such a mobile communication system, for example, in order to provide an access to the Internet or a streaming service, as a technology which is capable of drastically increasing a downstream transmission speed without increasing an occupied band in a radio frequency band, an HSDPA (High Speed Downlink Packet Access) mode has been applied and put to practical use.

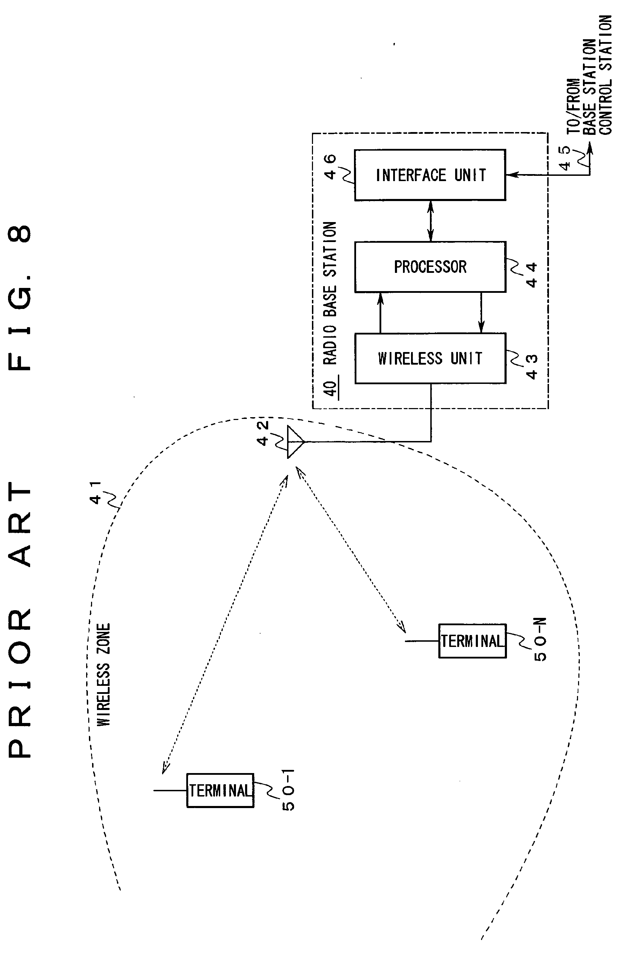

FIG. 8 is a diagram showing an example of a configuration of a mobile communication system to which the HSDPA mode is applied.

Referring to FIG. 8, in a wireless zone 41 which is formed by a radio base station 40, terminals 50-1 to 50-N are positioned.

The radio base station 40 is constructed by the following elements.
- An antenna system 42
- A wireless unit 43 connected to a feeding point of the antenna system 42
- A processor 44 connected to a demodulation output and a modulation input of the wireless unit 43
- A communication link 45 for the connection with a base station control station (not shown), and a network interface unit 46 connected to a specific port of the processor 44

In a mobile communication system having such a configuration, the processor 44 achieves the following items by the linkage with the above-mentioned base station control station via the network interface unit 46 and the communication link 45. To this end, the processor 44 generates, analyzes, and relays transmission data which should be transferred reciprocally between the terminals 50-1 to 50-N.
- Formation of the wireless zone 41
- Channel control and call establishment for a terminal, with which a call occurred (including the case in which transmission data is transmitted in packets) and which is positioned in the wireless zone 41, among the terminals 50-1 to 50-N

The wireless unit 43 suitably forms a wireless transmission path which fits a frequency allocation and a channel configuration according to a predetermined multiple access scheme (here, for simplicity, it is referred to as the CDMA scheme) among the terminals 50-1 to 50-N via the antenna system 42 under the control of the processor 44.

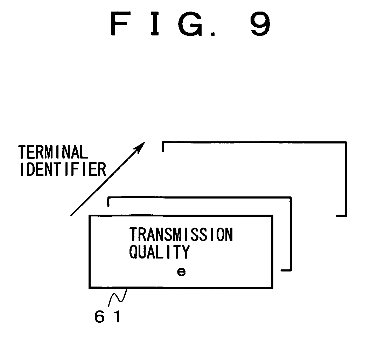

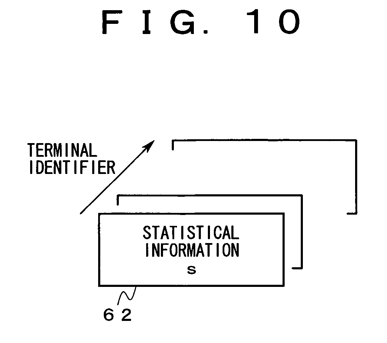

Further, in order to suitably allocate the band for the above-mentioned HSDPA mode to the terminals 50-1 to 50-N, the processor 44 has a mobile station information register 61 and a statistical information register 62 in FIGS. 9 and 10 in specified memory areas of a main memory (or an external memory).
- The mobile station information register 61 constructed by a collection of records which correspond to the terminals 50-1 to 50-N respectively and in each of which mobile station information described below is stored
- The statistical information register 62 constructed by a collection of records which correspond to the terminals 50-1 to 50-N respectively and in each of which statistical information described below is stored

Moreover, hereinafter, as regards items common to the terminals 5 0-1 to 50-N, instead of the subscripted numbers '1' to 'N', a subscripted character 'C may be appended to the numeral '50'.

The terminal 50-C which should receive the packet transmission service based on the HSDPA mode is notified of a channel (hereinafter, referred to as a common channel) which serves the packet transmission service and which is common to the corresponding terminal and other terminals on a time axis under a predefined channel control. And then, the terminal 50-C monitors transmission quality of status information, which is normally received in a known format from the radio base station 40 via a control channel formed by the radio base station 40, at a predetermined frequency.

Further, the terminal 50-C notifies the radio base station 40 as a destination of mobile station information including the transmission quality monitored in such a manner and an identifier of the terminal 50-C via an uplink of a predefined wireless channel (for example, the above-mentioned control channel).

In the radio base station 40, the processor 44 suitably performs the following processes according to mobile station information which is received via the antenna system 42 and the wireless unit 43.
- Acquire the identifier and the transmission quality (hereinafter, referred to as the latest transmission quality) which are included in mobile station information received.
- With a predetermined algorithm (here, for simplicity, it is referred to as an exponential smoothing method), calculate an average value (hereinafter, referred to as statistical information of the transmission quality (hereinafter, referred to as precedent transmission quality) which is stored in the record corresponding to the identifier acquired in such a manner among the records of the mobile station information register 61 and the latest transmission quality described above.
- Store statistical information in a record corresponding to the above-mentioned identifier among the records of the statistical information register 62.
- Update the value of the record corresponding to the identifier among the records of the mobile station information register 61 to the latest transmission quality described above.

Further, the processor 44 accesses to any one of the terminals 50-1 to 50-N and suitably performs the following processes at the moment when the above-mentioned common channel should be allocated. (for example, it is suitably determined according to the transmission speed previously set, the end of the service for the terminal to which the common channel is precedently allocated, and others).
(a) Specify a terminal (hereinafter, for simplicity, it is called a specified terminal and is represented by the numeral '50-t') corresponding the record storing a maximum value of the transmission quality e among the records of the mobile station information register 61. Moreover, hereinafter, an algorithm for specifying the terminal 50-t is referred to as a maximum CIR (Committed Information Rate) method.
(b) Send an access permission notification including the identifier of the specified terminal 50-t to a wireless channel (here, for simplicity, it is assumed to be uniquely determined under the predefined channel control) on which the specified terminal 50-t is waiting.

Moreover, there is a case in which unfairness that the common channel is hardly allocated to a terminal which receives a signal coming from the radio base station 40 via the control channel with low transmission quality should be rectified. In this case, instead of the maximum CIR method, for example, a PF (Proportional Fairness) method in which a terminal having a maximum value of a ratio E of statistical information s stored in a corresponding record of the statistical information register 62 and the transmission quality e stored in a corresponding record of the mobile station information register 61 is specified as the specified terminal 50-t may be applied.

Further, hereinafter, for simplicity, it is assumed that the above-mentioned common channel is allocated for every packet having a constant length, which is transmitted to each of the terminals 50-1 to 50-N as a destination, with respect to any one of the terminals 50-1 to 50-N.

On the other hand, whenever identifying the access permission notification, the specified terminal 50-t loads packets received via the common channel for a constant period from the time when the access permission notification is identified to the time when the predefined time passed and processes them as packets of which destinations fall within a local station.

Further, by connecting the processor 44 and the wireless unit 43 provided in the radio base station 40 with each other, the packets are transmitted based on an adaptive modulation scheme and a hybrid ARQ (Automatic Repeat reQuest) technique described below.
- Adaptive modulation scheme in which latest transmission information is notified from a terminal corresponding to a destination for every several milliseconds, and, when latest transmission information is favorable, a modulation scheme having high transmission efficiency, such as 16-ary QAM (Quadrature Amplitude Modulation) scheme, is applied, while, when latest transmission information is not favorable, a modulation scheme such as QPSK (Quadrature Phase Shift Keying) scheme is applied in a real-time manner.
- Hybrid ARQ technique in which, when identifying a retransmission request transmitted from the specified terminal 50-t, the radio base station 40 transmits a code string generated by error-correction-coding information without retransmitting the same information simply.

That is, for a terminal, which receives a signal having maximum transmission quality from the radio base station 40 via the control channel, among the terminals to which the packet transmission service should be provided in parallel based on the HSDPA mode, the common channel is allocated for every packet.

Therefore, the common channel is common to a plurality of terminals efficiently under a modulation scheme which is flexibly adapted to substantial transmission quality and the retransmission scheme.

### Patent Document 1

JP-W No. 2002-5 21886 (claim 1 and paragraphs 0005 to 0011)

### Non-Patent Document 2

Characteristic comparison of a scheduling method based on the throughput of each user in a downlink high speed packet, The Institute of Electronics, Information and Communication Engineers, Technical Report of IEICE, RCS2001-291, pp. 51-58, Mar. 2002

In the above-mentioned prior art, when the maximum CIR method is applied, the throughput of the common channel is maintained high. In this case, however, the common channel is hardly allocated to a terminal with the transmission quality notified as mobile station information, and thus a difference in quality of a service which is provided to the terminals 50-1 to 50-N is caused. Therefore, for the terminals 50-l to 50-N, fairness can be hardly ensured.

Further, when the PF method is applied, the common channel is allocated fairly to the terminals 50-1 to 50-N, but the effective throughput of the common channel is lowered, as compared to the case in which the maximum CIR method is applied.

### Disclosure of the Invention

It is a first object of the present invention to provide a transmission band allocating device which can allow a service to be fairly provided to terminals and enhance the throughput of a common channel.

Further, it is a second object of the present invention to fairly allocate a band to terminals with high accuracy, as compared to the prior art in which a terminal to which a band should be allocated is selected regardless of a previously allocated band as an actual result.

Further, it is a third object of the present invention to increase fairness of each terminal and ensure a minimum QoS (Quality of service) of each terminal.

Further, it is a fourth object of the present invention to calculate an integrated value serving as a criterion for selecting a terminal to which a band should be allocated by smoothing a precedently calculated integrated value in an order of time series without repetitively initializing and to maintain the integrated value within a desired finite range.

Further, it is a fifth object of the present invention to increase the throughput of a band as a finite resource and to maintain it high, as compared to the prior art where a terminal to which a band should be allocated is selected regardless of the number of times of the precedent retransmissions.

Further, it is a sixth object of the present invention to further increase the throughput of the band as a finite resource and to maintain it high, as compared to a case where a terminal to which a band should be allocated is selected based on only the number of times of the precedent retransmissions.

Further, it is a seventh object of the present invention to reduce a frequency at which the retransmission is performed in the band allocated to the terminal, as compared to a case where a terminal to which a band should be allocated is selected based on only the number of times of the precedent retransmissions or an integrated value of the number of times of the precedent retransmissions.

Further, it is an eighth object of the present invention to increase fairness of each terminal and to maintain fairness high, as compared to a case where a terminal to which a band should be allocated is selected for a precedent band allocation regardless of a priority.

Further, it is a ninth object of the present invention to mitigate deterioration of service quality and a decrease in throughput due to an extensive change in transmission quality, as compared to a case where a terminal to which a band should be allocated is selected regardless of uplink transmission quality.

Further, it is a tenth object of the present invention to enhance the throughput without drastically damaging fairness of each terminal, as compared to a case where a terminal to which a band should be allocated is selected regardless of uplink transmission quality.

Further, it is an eleventh object of the present invention to ensure fairness of each terminal and to enhance the throughput, even if transmission quality temporarily or extensively changes, as compared to a case where a terminal to which a band should be allocated is selected with reference to only uplink transmission quality.

Further, it is a twelfth object of the present invention to maintain fairness of each terminal high, as compared to a case where a terminal to which a band should be allocated is selected regardless of uplink transmission quality.

Further, it is a thirteenth object of the present invention to ensure fairness of each terminal even if uplink transmission quality temporarily or extensively changes.

Further, it is a fourteenth object of the present invention to simplify the configuration, decrease a cost, reduce the size, and enhance reliability.

Further, it is a fifteenth object of the present invention to smooth a precedently calculated average value in an order of time series without repetitively initializing and maintain the average value within a desired finite range.

Further, it is a sixteenth object of the present invention to maintain a throughput of a transmission band and fairness of each terminal in a wireless transmission system, to enhance general reliability and service quality, and to reduce an operating cost.

The above-mentioned objects can be achieved by a transmission band allocating device in which a maximum CIR (Committed Information Rate) method is improved such that a band is preferentially allocated to a terminal having a small integrated value of a band which is precedently allocated thereto.

In such a transmission band allocating device, the band is preferentially allocated to the terminal to which a small band is precedently allocated.

Further, the above-mentioned object can be achieved by a transmission band allocating device in which a maximum CIR method is improved such that a band is preferentially allocated when the number of times of the precedent latest retransmissions is small.

In such a transmission band allocating device, when the number of times of the actual precedent retransmissions is large, a priority with which the band should be allocated to the terminal is set to be small.

Further, the above-mentioned object can be achieved by a transmission band allocating device in which a maximum CIR method is improved such that a band is preferentially allocated when a cumulative value of the number of times of precedent retransmissions is small.

In such a transmission band allocating device, when the length of the precedent retransmission period is long, a priority with which the band should be allocated to the terminal is set to be small.

Further, the above-mentioned object can be achieved by a transmission band allocating device in which a maximum CIR method is improved such that a band is preferentially allocated when an average value of the number of times of the retransmissions is small.

In such a transmission band allocating device, even if the precedent retransmission is repetitively performed unexpectedly or temporarily, a priority with which the band is allocated to the terminal is set to be small when the average value of the number of times of the retransmissions is large.

Further, the above-mentioned object can be achieved by a transmission band allocating device in which a maximum CIR method is improved such that a band is preferentially allocated when it takes a long waiting time until a band is precedently allocated.

In such a transmission band allocating device, when it takes the long waiting time until the band is precedently allocated, the band is preferentially allocated to the terminal.

Further, the above-mentioned object can be achieved by a transmission band allocating device in which a maximum CIR method is improved such that a band is preferentially allocated when a priority with which a band is precedently allocated thereto is low.

In such a transmission band allocating device, a priority with which the band should be allocated to each terminal is set to be high with predetermined frequency, even if downlink transmission quality of the corresponding terminal is not higher than those of other terminals.

Further, the above-mentioned object can be achieved by a transmission band allocating device in which a maximum CIR method is improved such that a band is preferentially allocated when a variation in history of transmission quality of an uplink which is formed in a band precedently allocated is small.

In such a transmission band allocating device, the band is preferentially allocated to each terminal when a range of a change in transmission quality of the uplink which is formed for each terminal is narrow.

Further, the above-mentioned object can be achieved by a transmission band allocating device in which a maximum CIR method is improved such that a band is preferentially allocated when downlink transmission quality of a band precedently allocated is high.

In such a transmission band allocating device, the band is preferentially allocated to the terminal when uplink transmission quality is high, in addition to downlink transmission quality.

Further, the above-mentioned object can be achieved by a transmission band allocating device in which a maximum CIR method is improved such that a band is preferentially allocated when an average value of downlink transmission qualities of bands precedently allocated is high.

In such a transmission band allocating device, the band is preferentially allocated to the terminal when the average value of uplink transmission qualities, in addition to downlink transmission qualities, is large.

Further, the above-mentioned object can be achieved by a transmission band allocating device in which a PF (Proportional Fairness) method, not a maximum CIR method, is improved such that a band is preferentially allocated to a terminal having a small integrated value of a band precedently allocated.

In such a transmission band allocating device, the band is preferentially allocated to the terminal when the band precedently and actually allocated is small.

Further, the above-mentioned object can be achieved by a transmission band allocating device in which a PF method, not a maximum CIR method is improved such that a band is preferentially allocated when the number of times of the precedent latest retransmissions is small.

In such a transmission band allocating device, a priority with which the band should be allocated to the terminal is set to be small when the number of times of the actual precedent retransmissions is large.

Further, the above-mentioned object can be achieved by a transmission band allocating device in which a PF method, not a maximum CIR method, is improved such that a band is preferentially allocated when a cumulative value of the number of times of the precedent retransmissions is small.

In such a transmission band allocating device, a priority with which the band should be allocated to the terminal when the length of the precedent retransmission period is long.

Further, the above-mentioned object can be achieved by a transmission band allocating device in which a PF method, not a maximum CIR method, is improved such that a band is preferentially allocated when an average value of the number of times of the retransmissions is small.

In such a transmission band allocating device, even if precedent retransmission is repetitively performed unexpectedly or temporarily, a priority with which the band should be allocated to the terminal when the average value of the number of times of the retransmissions is large.

Further, the above-mentioned object can be achieved by a transmission band allocating device in which a PF method, not a maximum CIR method, is improved such that a band is preferentially allocated when it takes a long waiting time until a band is precedently allocated.

In such a transmission band allocating device, the band is preferentially allocated to the terminal when it takes the long waiting time until the band is precedently allocated.

Further, the above-mentioned object can be achieved by a transmission band allocating device in which a PF method, not a maximum CIR method, is improved such that a band is preferentially allocated when a priority with which a band is precedently allocated is low.

In such a transmission band allocating device, a priority with which the band should be allocated to each terminal is set to be high with predetermined frequency, even if downlink transmission quality of the corresponding terminal is not higher than those of other terminals.

Further, the above-mentioned object can be achieved by a transmission band allocating device in which a PF method, not a maximum CIR method, is improved such that a band is preferentially allocated when a variation in history of transmission quality of an uplink which is formed in a band precedently allocated is small.

In such a transmission band allocating device, the band is preferentially allocated to each terminal when a range of a change in transmission quality of the uplink which is formed for each terminal is narrow.

Further, the above-mentioned object can be achieved by a transmission band allocating device in which a PF method, not a maximum CIR method, is improved such that a band is preferentially allocated when downlink transmission quality of a band precedently allocated is high.

In such a transmission band allocating device, the band is preferentially allocated to the terminal when uplink transmission quality, in addition to downlink transmission quality, is high.

Further, the above-mentioned object can be achieved by a transmission band allocating device in which a PF method, not a maximum CIR method, is improved such that a band is preferentially allocated when an average value of downlink transmission qualities of bands precedently allocated is high.

In such a transmission band allocating device, the band is preferentially allocated to the terminal when the average value of uplink transmission qualities, in addition to downlink transmission qualities, is high.

Further, the above-mentioned object can be achieved by a transmission band allocating device in which a maximum CIR method and a PF method are improved such that a band is preferentially allocated when transmission quality of an uplink which is formed in a band precedently allocated is low.

In such a transmission band allocating device, the band is preferentially allocated to the terminal when uplink transmission quality is low.

Further, the above-mentioned object can be achieved by a transmission band allocating device in which a maximum CIR method and a PF method are improved such that a band is preferentially allocated when an average value of transmission qualities of uplinks which are formed in bands precedently allocated is small.

In such a transmission band allocating device, the band is preferentially allocated to the terminal when the average value of uplink transmission qualities is small.

Further, the above-mentioned object can be achieved by a transmission band allocating device in which downlink transmission quality is specified as transmission quality corresponding to both or any one of a modulation scheme which is determined under an adaptive modulation scheme used for a downlink and a transmission path coding scheme which is determined under a hybrid ARQ (Automatic Repeat reQuest) scheme used for the downlink.

In such a transmission band allocating device, downlink transmission quality serving as the criterion for selecting the terminal to which the band should be allocated is specified with no dedicated hardware or software, as long as it is properly determined under both or any one of the adaptive modulation scheme and the hybrid ARQ scheme described above.

Further, the above-mentioned object can be achieved by a transmission band allocating device in which uplink transmission quality is specified as transmission quality corresponding to both or any one of a modulation scheme which is determined under an adaptive modulation scheme used for an uplink and a transmission path coding scheme which is determined under a hybrid ARQ scheme used for the uplink.

In such a transmission band allocating device, uplink transmission quality serving as the criterion for selecting the terminal to which the band should be allocated is specified with no dedicated hardware or software, as long as it is properly determined under both or any one of the adaptive modulation scheme and the hybrid ARQ scheme described above.

Further, the above-mentioned object can be achieved by a transmission band allocating device in which the above-mentioned integrated value is maintained as a product sum to a weight having a large value in an ascending order of time series.

In such a transmission band allocating device, the integrated value serving as the criterion for selecting the terminal to which the band should be allocated is calculated as the lightly weighted product sum when the value is old.

Further, the above-mentioned object can be achieved by a transmission band allocating device in which the above-mentioned average value is maintained as a product sum to a weight having a large value in an ascending order of times series.

In such a transmission band allocating device, the average value serving as the criterion for selecting the terminal to which the band should be allocated is calculated as the lightly weighted product sum when the value is old.

### Brief Description of the Drawings

FIG. 1 is a principal block diagram of the present invention;
FIG. 2 is a diagram showing a configuration of a bandwidth register;
FIG. 3 is a diagram showing a configuration of a retransmission count register;
FIG. 4 is a diagram showing a configuration of a waiting time register;
FIG. 5 is a diagram showing a configuration of a priority register;
FIG. 6 is a diagram showing a configuration of a transmission quality register;
FIG. 7 is a diagram showing a configuration of a transmission quality dispersion register;
FIG. 8 is a diagram showing an example of a configuration of a mobile communication system to which an HSDPA mode is applied;
FIG. 9 is a diagram showing a configuration of a mobile station information register; and
FIG. 10 is a diagram showing a configuration of a statistical information register.

### Best Mode for Carrying Out the Invention

To begin with, a principle of a transmission band allocating device according to the present invention will be described.

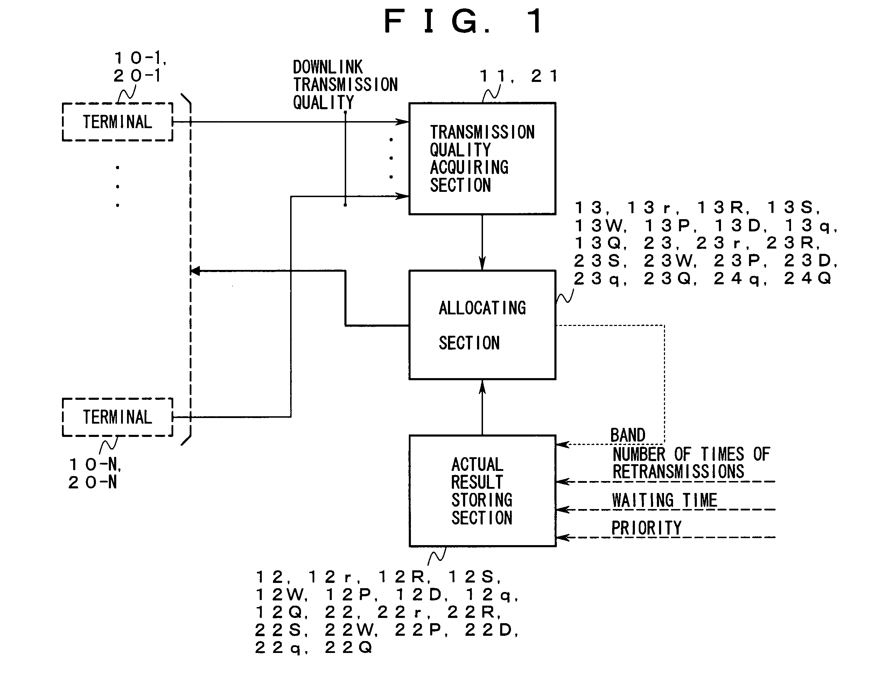

FIG. 1 is a principal block diagram of the present invention.

A principle of a first transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12 stores an integrated value of bands which are precedently allocated to the terminals 10-1 to 10-N. An allocating section 13 preferentially allocates a band to a corresponding terminal among the terminals 10-1 to 10-N in a descending order of products of a weight which becomes small when the integrated value stored in the actual result storing section 12 is large and the transmission qualities stored in the transmission quality acquiring section 11.

That is, for the terminals 10-1 to 10-N, the band is preferentially allocated when the precedently and actually allocated band is small.

Therefore, the band allocation for the terminals 10-1 to 10-N is fairly performed as compared to the prior art in which the terminal to which the band should be allocated is selected regardless of the previously allocated band as an actual result.

A principle of a second transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12r stores the number of times of the retransmissions in a transmission unit precedently transmitted to the terminals 10-1 to 10-N. An allocating section 13r preferentially allocates a band to a corresponding terminal among the terminals 10-1 to 10-N in a descending order of products of a weight which becomes small when the number of times of the retransmissions stored in the actual result storing section 1 2r is large and the transmission qualities stored in the transmission quality acquiring section 11.

That is, for the terminals 10-1 to 10-N, a priority with which the band should be preferentially allocated is set to be small when the number of times of the actual precedent retransmissions is large.

Therefore, the throughput of the band as a finite resource is increased and is maintained high, as compared to the prior art in which the terminal to which the band should be allocated is selected regardless of the number of times of the retransmissions.

A principle of a third transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12R stores an integrated value of the number of times of the retransmissions in a transmission unit precedently transmitted to the terminals 10-1 to 10-N. An allocating section 13R preferentially allocates a band to a corresponding terminal among the terminals 10-1 to 10-N in a descending order of products of a weight which becomes small when the integrated value stored in the actual result storing section 12R is large and the transmission qualities stored in the transmission quality acquiring section 11.

That is, for the terminals 10-1 to 10-N, the priority with which the band should be allocated is set to be small when the length of the precedent retransmission period is long.

Therefore, the throughput of the band as a finite resource is increased and is maintained high, as compared to the case in which the terminal to which the band should be allocated is selected based on only the number of times of the precedent retransmissions.

A principle of a fourth transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12S stores an average value of the number of times of the retransmissions in a transmission unit precedently transmitted to the terminals 10-1 to 10-N. An allocating section 13S preferentially allocates a band to a corresponding terminal among the terminals 10-1 to 10-N in a descending order of products of a weight which becomes small when the average value stored in the actual result storing section 12S is large and the transmission qualities stored in the transmission quality acquiring section 11.

That is, for the terminals 10-1 to 10-N, even if precedent retransmission is repetitively performed unexpectedly or temporarily, the priority with which the band should be allocated is set to be small when the average value of the number of times of the retransmissions is large.

Therefore, a frequency of retransmission on the band allocated to the terminal is reduced, as compared to the case in which the terminal to which the band should be allocated is selected based on only the number of times of the precedent retransmissions or the integrated value of the number of times of the precedent retransmissions.

A principle of a fifth transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12W stores a waiting time until a band is precedently allocated. An allocating section 13W preferentially allocates a band to a corresponding terminal among the terminals 10-1 to 10-N in a descending order of products of a weight which becomes large when the waiting time stored in the actual result storing section 12W is long and the transmission qualities stored in the transmission quality acquiring section 11.

That is, for the terminals 10-1 to 10-N, the band is preferentially allocated when the waiting time until the band is precedently allocated is long.

Therefore, fairness of each of the terminals 10-1 to 10-N increases and the minimum QoS (Quality of Service) of each of the terminals 10-1 to 10-N is ensured with high accuracy, as compared to the prior art in which the terminal to which the band should be allocated is selected regardless of such a time.

A principle of a sixth transmission band allocating device according to the present invention is as follows.

For terminals 10-l to 10-N, a transmission quality acquiring section 11 stores downlink transmission qualities notified from the terminals 10-1 to 10-N. For the terminals 10-1 to 10-N, an actual result storing section 12P stores a priority which is given as an order in which a band can be precedently allocated. An allocating section 13P preferentially allocates a band to a corresponding terminal among the terminals 10-1 to 10-N in a descending order of products of a weight which becomes large when the priority stored in the actual result storing section 12P is low and the transmission qualities stored in the transmission quality acquiring section 11.

That is, even if the downlink transmission quality of the corresponding terminal is not higher than those of other terminals, the priority with which the band should be allocated to each of the terminals 10-1 to 10-N is set to be high with predetermined frequency.

Therefore, fairness of each of the terminals 10-1 to 10-N increases and also fairness is maintained high, as compared to the case in which the terminal to which the band should be allocated is selected regardless of the priority with which the band is precedently allocated.

A principle of a seventh transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12D stores a history of transmission quality of an uplink which is formed in a band precedently allocated to each of the terminals 10-1 to 10-N. An allocating section 13D preferentially allocates a band to a corresponding terminal among the terminals 10-1 to 10-N in a descending order of products of a weight which becomes small when a variation in history of transmission quality stored in the actual result storing section 12D is large and the transmission qualities stored in the transmission quality acquiring section 11.

That is, for the terminals 10-1 to 10-N, the band is preferentially allocated when a range of a change in transmission quality of the uplink formed in the band of each of the terminals 10-1 to 10-N is narrow.

Therefore, deterioration of service quality and a decrease in throughput due to an extensive change in transmission quality are mitigated, as compared to the case in which the terminal to which the band should be allocated is selected regardless of the uplink transmission quality.

A principle of an eighth transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12q stores transmission qualities of uplinks which are formed in bands precedently allocated to the terminals 10-1 to 10-N. An allocating section 13q preferentially allocates a band to a corresponding terminal among the terminals 10-1 to 10-N in a descending order of products of a weight which becomes large when the transmission quality stored in the actual result storing section 12q is large and the transmission qualities stored in the transmission quality acquiring section 11.

That is, for the terminals 10-1 to 10-N, the band is preferentially allocated when the uplink transmission quality, in addition to the downlink transmission quality, is large.

Therefore, the throughput is enhanced without drastically damaging fairness of each of the terminals 10-1 to 10-N, as compared to the case in which the terminal to which the band should be allocated is selected regardless of the uplink transmission quality.

A principle of a ninth transmission band allocating device according to the present invention is as follows.

For terminals 10-1 to 10-N, a transmission quality acquiring section 11 stores downlink transmission qualities notified from the terminals 10-1 to 10-N. For the terminals 10-1 to 10-N, an actual result storing section 12Q stores an average value of transmission qualities of uplinks which are formed in bands precedently allocated to the terminals 10-1 to 10-N. An allocating section 13Q preferentially allocates a band to a corresponding terminal among the terminals 10-1 to 10-N in a descending order of products of a weight which becomes large when the average value stored in the actual result storing section 12Q is large and transmission qualities stored in the transmission quality acquiring section 11.

That is, for the terminals 10-1 to 10-N, the band is preferentially allocated when the average value of the uplink transmission qualities, in addition to the downlink transmission qualities, is large.

Therefore, even if the transmission quality temporarily or extensively changes, fairness of each of the terminals 10-1 to 10-N is ensured and the throughput is enhanced, as compared to the case in which the terminal to which the band should be allocated is selected with reference to only the uplink transmission quality.

A principle of a tenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22 stores an integrated value of bands which are precedently allocated to the terminals 20-1 to 20-N. An allocating section 23 preferentially allocates a band to a corresponding terminal among the terminals 20-1 to 20-N in a descending order of products of a weight which becomes small when the integrated value stored in the actual result storing section 22 is large and ratios of the transmission qualities and the average value stored in the transmission quality acquiring section 21.

That is, for the terminals 20-1 to 20-N, the band is preferentially allocated when the precedently and actually allocated band is small.

Therefore, the band allocation for the terminals 20-1 to 20-N is fairly performed as compared to the prior art in which the terminal to which the band should be allocated is selected regardless of the previously allocated band as an actual result.

A principle of an eleventh transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22r stores the number of times of the retransmissions in a transmission unit precedently transmitted to the terminals 20-1 to 20-N. An allocating section 23r preferentially allocates a band to a corresponding terminal among the terminals 20-1 to 20-N in a descending order of products of a weight which becomes small when the number of times of the retransmissions stored in the actual result storing section 22r is large and ratios of the transmission qualities and the average value stored in the transmission quality acquiring section 21.

That is, for the terminals 20-1 to 20-N, a priority with which the band should be preferentially allocated is set to be small when the number of times of the actual precedent retransmissions is large.

Therefore, the throughput of the band as a finite resource is increased and is maintained high, as compared to the prior art in which the terminal to which the band should be allocated is selected regardless of the number of times of the retransmissions.

A principle of a twelfth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22R stores an integrated value of the number of times of the retransmissions in a transmission unit precedently transmitted to the terminals 20-1 to 20-N. An allocating section 23R preferentially allocates a band to a corresponding terminal among the terminals 20-1 to 20-N in a descending order of products of a weight which becomes small when the integrated value stored in the actual result storing section 22R is large and ratios of the transmission qualities and the average value stored in the transmission quality acquiring section 21.

That is, for the terminals 20-1 to 20-N, the priority with which the band should be allocated is set to be small when the length of the precedent retransmission period is long.

Therefore, the throughput of the band as a finite resource is increased and is maintained high, as compared to the case in which the terminal to which the band should be allocated is selected based on only the number of times of the precedent retransmissions.

A principle of a thirteenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22S stores an average value of the number of times of the retransmissions in a transmission unit precedently transmitted to the terminals 20-1 to 20-N. An allocating section 23S preferentially allocates a band to a corresponding terminal among the terminals 20-1 to 20-N in a descending order of products of a weight which becomes small when the average value stored in the actual result storing section 22S is large and ratios of the transmission qualities and the average value stored in the transmission quality acquiring section 21.

That is, for the terminals 20-1 to 20-N, even if precedent retransmission is repetitively performed unexpectedly or temporarily, the priority with which the band should be allocated is set to be small when the average value of the number of times of the retransmissions is large.

Therefore, a frequency of retransmission on the band allocated to the terminal is reduced, as compared to the case in which the terminal to which the band should be allocated is selected based on only the number of times of the precedent retransmissions or the integrated value of the number of times of the precedent retransmissions.

A principle of a fourteenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22W stores a waiting time until a band is precedently allocated. An allocating section 23W preferentially allocates a band to a corresponding terminal among the terminals 20-1 to 20-N in a descending order of products of a weight which becomes large when the waiting time stored in the actual result storing section 22W is long and ratios of the transmission qualities and the average value stored in the transmission quality acquiring section 21.

That is, for the terminals 20-1 to 20-N, the band is preferentially allocated when the waiting time until the band is precedently allocated is long.

Therefore, fairness of each of the terminals 20-1 to 20-N increases and the minimum QoS (Quality of Service) of each of the terminals 20-1 to 20-N is ensured with high accuracy, as compared to the prior art in which the terminal to which the band should be allocated is selected regardless of such a time.

A principle of a fifteenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22P stores a priority which is given as an order in which a band can be precedently allocated. An allocating section 23P preferentially allocates a band to a corresponding terminal among the terminals 20-1 to 20-N in a descending order of products of a weight which becomes large when the priority stored in the actual result storing section 22P is low and ratios of the transmission qualities and the average value stored in the transmission quality acquiring section 21.

That is, even if the downlink transmission quality of the corresponding terminal is not higher than those of other terminals, the priority with which the band should be allocated to each of the terminals 20-1 to 20-N is set to be high with predetermined frequency.

Therefore, fairness of each of the terminals 20-1 to 20-N increases and also fairness is maintained high, as compared to the case in which the terminal to which the band should be allocated is selected regardless of the priority with which the band is precedently allocated.

A principle of a sixteenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22D stores a history of transmission quality of an uplink which is formed in a band precedently allocated to each of the terminals 20-1 to 20-N. An allocating section 23D preferentially allocates a band to a corresponding terminal among the terminals 20-1 to 20-N in a descending order of products of a weight which becomes small when a variation in history of transmission quality stored in the actual result storing section 22D is large and ratios of the transmission qualities and the average value stored in the transmission quality acquiring section 21.

That is, for the terminals 20-1 to 20-N, the band is preferentially allocated when a range of a change in transmission quality of the uplink formed in the band of each of the terminals 20-1 to 20-N is narrow.

Therefore, deterioration of service quality and a decrease in throughput due to an extensive change in transmission quality are mitigated, as compared to the case in which the terminal to which the band should be allocated is selected regardless of the uplink transmission quality.

A principle of a seventeenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22q stores transmission qualities of uplinks which are formed in bands precedently allocated to the terminals 20-1 to 20-N. An allocating section 23q preferentially allocates a band to a corresponding terminal among the terminals 20-1 to 20-N in a descending order of products of a weight which becomes large when the transmission quality stored in the actual result storing section 22q is large and ratios of the transmission qualities and the average value stored in the transmission quality acquiring section 21.

That is, for the terminals 20-1 to 20-N, the band is preferentially allocated when the uplink transmission quality, in addition to the downlink transmission quality, is large.

Therefore, the throughput is enhanced without drastically damaging fairness of each of the terminals 20-1 to 20-N, as compared to the case in which the terminal to which the band should be allocated is selected regardless of the uplink transmission quality.

A principle of an eighteenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22Q stores an average value of transmission qualities of uplinks which are formed in bands precedently allocated to the terminals 20-1 to 20-N. An allocating section 23Q preferentially allocates a band to a corresponding terminal among the terminals 20-1 to 20-N in a descending order of products of a weight which becomes large when the average value stored in the actual result storing section 22Q is large and ratios of the transmission qualities and the average value stored in the transmission quality acquiring section 21.

That is, for the terminals 20-1 to 20-N, the band is preferentially allocated when the average value of the uplink transmission qualities, in addition to the downlink transmission qualities, is large.

Therefore, even if the transmission quality temporarily or extensively changes, fairness of each of the terminals 20-1 to 20-N is ensured and the throughput is enhanced, as compared to the case in which the terminal to which the band should be allocated is selected with reference to only the uplink transmission quality.

A principle of a nineteenth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22q stores transmission qualities of uplinks which are formed in bands precedently allocated to the terminals 20-1 to 20-N..An allocating section 24q preferentially allocates a band to a corresponding terminal among the terminals 20-1 to 20-N in a descending order of products of a weight which becomes small when the transmission quality stored in the actual result storing section 22q is large and ratios of the transmission qualities and the average value stored in the transmission quality acquiring section 21.

That is, for the terminals 20-1 to 20-N, the band is preferentially allocated when the uplink transmission quality is low.

Therefore, fairness of each of the terminals 20-1 to 20-N is maintained high, as compared to the case in which the terminal to which the band should be allocated is selected regardless of the uplink transmission quality.

A principle of a twentieth transmission band allocating device according to the present invention is as follows.

For terminals 20-1 to 20-N, a transmission quality acquiring section 21 stores latest transmission qualities with regard to downlinks individually notified and an average value of the transmission qualities. For the terminals 20-1 to 20-N, an actual result storing section 22Q stores an average value of transmission qualities of uplinks which are formed in bands precedently allocated to the terminals 20-1 to 20-N. An allocating section 24Q preferentially allocates a band to a corresponding terminal among the terminals 20-1 to 20-N in a descending order of products of a weight which becomes small when the average value stored in the actual result storing section 22Q is large and ratios of the transmission qualities and the average value stored in the transmission quality acquiring section 21.

That is, for the terminals 20-1 to 20-N, the band is preferentially allocated when the average value of the uplink transmission qualities is small.

Therefore, even if the uplink transmission quality temporarily or extensively changes, fairness of each of the terminals 20-1 to 20-N is ensured.

A principle of a twenty-first transmission band allocating device according to the present invention is as follows.

The downlink transmission quality corresponds to both or any one of a modulation scheme which is determined under an adaptive modulation scheme used for the downlink and a transmission path coding scheme which is determined under a hybrid ARQ scheme used for the downlink.

That is, the downlink transmission quality serving as the criterion for selecting the terminal to which the band should be allocated is specified with no dedicated hardware or software, as long as it is properly determined under both or any one of the adaptive modulation scheme and the hybrid ARQ scheme.

Therefore, the configuration is simplified, the cost decreases, the size is reduced, and reliability is enhanced.

A principle of a twenty-second transmission band allocating device according to the present invention is as follows.

The uplink transmission quality corresponds to both or any one of a modulation scheme which is determined under an adaptive modulation scheme used for the uplink and a transmission path coding scheme which is determined under a hybrid ARQ scheme used for the uplink.

That is, the uplink transmission quality serving as the criterion for selecting the terminal to which the band should be allocated is specified with no dedicated hardware or software, as long as it is properly determined under both or any one of the adaptive modulation scheme and the hybrid ARQ scheme.

Therefore, the configuration is simplified, the cost decreases, the size is reduced, and reliability is enhanced.

A principle of a twenty-third transmission band allocating device according to the present invention is as follows.

For the terminals 10-1 to 10-N and 20-1 to 20-N, the actual result storing section 12, 12R, 12S, 22, 22R and 22S store the integrated value as a product sum to the weight having a large value in an ascending order of time series.

That is, the integrated value serving as the criterion for selecting the terminal to which the band should be allocated is calculated as the lightly weighted product sum when the value is old.

Therefore, the precedently calculated integrated value is smoothed in an order of time series without being repetitively initialized and the integrated value falls within a desired finite range, as compared to the case in which the old value is included in the integrated value without being lightly weighted.

A principle of a twenty-fourth transmission band allocating device according to the present invention is as follows.

For the terminals 10-1 to 10-N and 20-1 to 20-N, the actual result storing section 12Q and 22Q store the average value as a product sum to the weight having a large value in an ascending order of time series.

That is, the average value serving as the criterion for selecting the terminal to which the band should be allocated is calculated as the lightly weighted product sum when the value is old.

Therefore, the precedently calculated average value is smoothed in an order of time series without being repetitively initialized and the average value falls within a desired finite range, as compared to the case in which the old value is included in the average value without being lightly weighted.

Hereinafter, embodiments of the present invention will be described in detail with reference to the drawings.

### [First Embodiment]

An operation of a first embodiment of the present invention will now be described with reference to FIGS. 8 to 10.

The present embodiment is characterized by an order of a process in which the specified terminal is specified by the processor 44 provided in the radio base station 40.

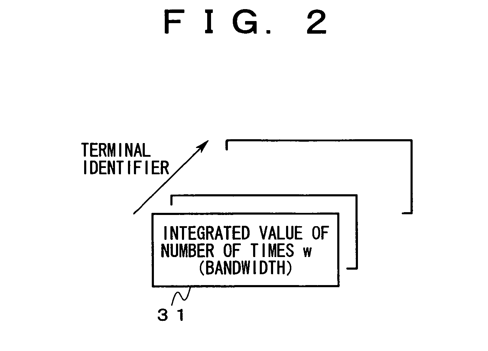

As shown in FIG. 2, in a specific memory area of a main memory (or an external memory) of the processor 44, a bandwidth register 31 constructed by a collection of records which correspond to the terminals 50-1 to 50-N respectively and in each of which an integrated value of the number of times described below is stored is arranged.

Further, the processor 44 specifies a terminal, which satisfies any one of the following conditions, as the specified terminal 50-t.
- A terminal corresponding to a record, among the records of the mobile station information register 61, in which a product (= e · f(w)) of the transmission quality e stored in a corresponding record of the mobile station information register 61 and a decreasing function f(w) of the integrated value w stored in a corresponding record of the bandwidth register 31 is a maximum.
- A terminal corresponding to a record, among the records of the statistical information register 62, in which a product (= E · f(w)=s · f(w) / e) of a ratio E of statistical information s and transmission quality e stored in corresponding records of the statistical information register 62 and the mobile station information register 61 respectively and the decreasing function f(w) of the integrated value w stored in a corresponding record of the bandwidth register 31 is a maximum.

Further, whenever specifying any one of the terminals 50-1 to 50-N as the specified terminal 50-t, the processor 44 increments a discrete value stored in a record among the records of the bandwidth register 31 corresponding to the specified terminal 50-t.

That is, the common channel is preferentially allocated to a terminal in which the number of times of the precedently allocated bands (the integrated value of the allocated band among the bands of the common channel) is small.

Therefore, the common channel is fairly allocated to the terminal to which the packet transmission service should be provided in parallel based on the HSDPA mode, as compared to the prior art in which the specified terminal is specified regardless of the integrated value described above.

Moreover, in the present embodiment, all the bands of the common channel are allocated to the respective specified terminals for a constant period and the integrated value w of the number of times that the common channel is allocated for each terminal is stored in the respective records of the bandwidth register 31.

However, the present invention is not limited to such a configuration. For example, in a case in which both or any one of the band of the common channel which is allocated to the specified terminal and the length of the period that the common channel is allocated for each terminal is not constant, instead of the discrete value w, a substantially allocated bandwidth or an integrated value of a transmission capacity may be stored in the respective records of the bandwidth register 31.

### [Second Embodiment]

An operation of a second embodiment of the present invention will now be described with reference to FIGS. 8 to 10. The present embodiment is characterized by an order of a process in which the specified terminal is specified by the processor 44 provided in the radio base station 40.

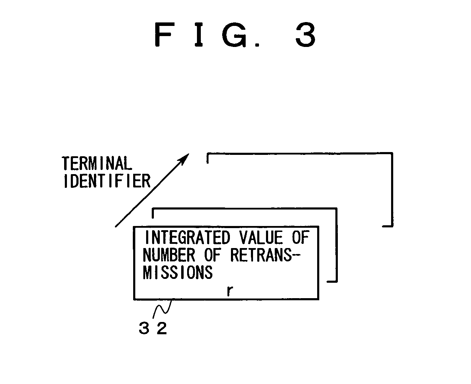

As shown in FIG. 3, in a specific memory area of a main memory (or an external memory) of the processor 44, a retransmission count register 32 constructed by a collection of records which correspond to the terminals 50-1 to 50-N respectively and in each of which an integrated value of the number of times of retransmissions described below is stored is arranged.

Further, whenever retransmitting a precedently transmitted packet according to a retransmission request transmitted from the specified terminal 50-t, the processor 44 increments the integrated value of the number of times of the retransmissions stored in a record corresponding to the specified terminal 50-t among the records of the retransmission count register 32.

Further, the processor 44 specifies a terminal, which satisfies any one of the following conditions, as the specified terminal 50-t.
- A terminal corresponding to a record, among the records of the mobile station information register 61, in which a product (= e . f(r)) of the transmission quality e stored in a corresponding record of the mobile station information register 61 and a decreasing function f(r) of the integrated value r of the number of times of the retransmissions stored in a corresponding record of the retransmission count register 31 is a maximum.
- A terminal corresponding to a record, among the records of the statistical information register 62, in which a product (= E · f(r) = s · f(r) / e) of a ratio E of statistical information s and transmission quality e stored in corresponding records of the statistical information register 62 and the mobile station information register 61 respectively and the decreasing function f(r) of the integrated value r of the number of times of the retransmission stored in a corresponding record of the retransmission count register 31 is a maximum.

That is, the common channel is preferentially allocated to a terminal in which the number of times of the precedent retransmissions is small.

Therefore, the throughput of the common channel increases as compared to the prior art in which the specified terminal is specified regardless of the number of times of the retransmissions.

Moreover, in the present embodiment, the integrated value of the number of times of the precedent retransmissions is stored is stored in the respective records of the retransmission count register 32.

However, the present invention is not limited to such a configuration. For example, only for a single packet precedently transmitted to a corresponding terminal destination, the number of times of the retransmission or binary information of which the value becomes'1' only when the retransmission is performed may be stored in the respective records of the retransmission count register 32.

Further, in the present embodiment, the common channel is preferentially allocated to a terminal in which the number of times of the retransmissions is small.

However, the present invention is not limited to such a configuration. For example, the common channel may be allocated when a failure ratio to be estimated as an average value of the number of times of the retransmissions is high, such that service quality which is provided to the terminal with the above-mentioned throughput may be equalized.

### [Third Embodiment]

An operation of a third embodiment will now be described with reference to FIGS. 8 to 10.

The present embodiment is characterized by an order of a process in which the specified terminal is specified by the processor 44 provided in the radio base station 40.

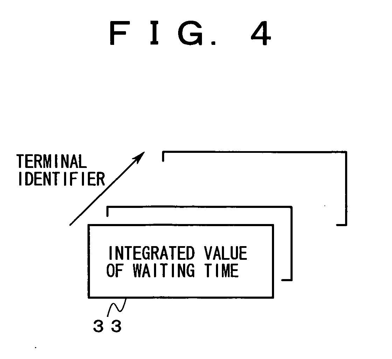

As shown in FIG. 4, in a specific memory area of a main memory (or an external memory) of the processor 44, a waiting time register 33 constructed by a collection of records which correspond to the terminals 50-1 to 50-N respectively and in each of which an integrated value of the waiting time described below is stored is arranged.

Further, whenever the specified terminal 50-t requests the allocation of the common channel, the processor 44 monitors the time until the common channel is substantially allocated and adds the time to the integrated value stored in a corresponding to the specified terminal 50-t among the records of the waiting time register 33.

Further, the processor 44 specifies a terminal, which satisfies any one of the following conditions, as the specified terminal 50-t.
- A terminal corresponding to a record, among the records of the mobile station information register 61, in which a product (= e · f(t)) of the transmission quality e stored in a corresponding record of the mobile station information register 61 and a decreasing function f(t) of an integrated value t stored in a corresponding record of the waiting time register 33 is a maximum.
- A terminal corresponding to a record, among the records of the statistical information register 62, in which a product (= E · f(t) = s · f(t) / e) of a ratio E of statistical information s and transmission quality e stored in corresponding records of the statistical information register 62 and the mobile station information register 61 respectively and the decreasing function f(t) of the integrated value t stored in a corresponding record of the waiting time register 33 is a maximum.

That is, the common channel is preferentially allocated to a terminal in which the time until the common channel is precedently allocated is long.

Therefore, for a terminal to which the packet transmission service is provided in parallel based on the HSDPA mode, fairness increases and the minimum QoS of each terminal is ensured with high accuracy, as compared to the prior art in which the specified terminal is specified regardless of such a time.

### [Fourth Embodiment]

An operation of a fourth embodiment will now be described with reference to FIGS. 8 to 10.

The present embodiment is characterized by an order of a process in which the specified terminal is specified by the processor 44 provided in the radio base station 40.

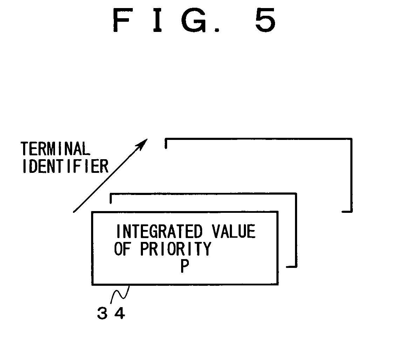

As shown in FIG. 5, in a specific memory area of a main memory (or an external memory) of the processor 44, a priority register 34 constructed by a collection of records which correspond to the terminals 50-1 to 50-N respectively and in each of which an integrated value of the priority described below is stored is arranged.

Further, whenever the common channel is allocated to the specified terminal 50-t, the processor 44 calculates the priority (here, for simplicity, it is assumed to be an order with which can be specified as the specified terminal 50-t) and adds the priority to the integrated value stored in a corresponding record for each terminal among the records of the priority register 34.

Further, the processor 44 specifies a terminal, which satisfies any one of the following conditions, as the specified terminal 50-t.
- A terminal corresponding to a record, among the records of the mobile station information register 61, in which a product (= e · f(P)) of the transmission quality e stored in a corresponding record of the mobile station information register 61 and a decreasing function f(P) of the priority P stored in a corresponding record of the priority register 34 is a maximum.
- A terminal corresponding to a record, among the records of the statistical information register 62, in which a product (= E - f(P) = s - f(P) / e) of a ratio E of statistical information s and transmission quality e stored in corresponding records of the statistical information register 62 and the mobile station information register 61 respectively and the decreasing function f(P) of the priority P stored in a corresponding record of the priority register 34 is a maximum.

That is, the common channel is preferentially allocated to a terminal in which the order that the common channel should be precedently allocated is low.

Therefore, for a terminal to which the packet transmission service is provided in parallel based on the HSDPA mode, fairness increases, as compared to the prior art in which the specified terminal is specified regardless of such an order or priority.

Moreover, in the present embodiment, the integrated value of the priority with which the common channel is precedently allocated or could be allocated for each terminal is stored in the respective records of the priority register 34.

However, the present invention is not limited to such a configuration. For example, any one of the following items may be stored in the respective records of the priority register 34.
- A single priority with which the common channel could be precedently allocated to the corresponding terminal
- An average value of the priority with which the common channel could be allocated to the corresponding terminal several times
- A criterion which should be provided for determining the order or a value which is provided as a function of the criterion and increases in an ascending order of the order.

### [Fifth Embodiment]

An operation of a fifth embodiment will now be described with reference to FIGS. 8 to 10.

The present embodiment is characterized by an order of a process in which the specified terminal is specified by the processor 44 provided in the radio base station 40.

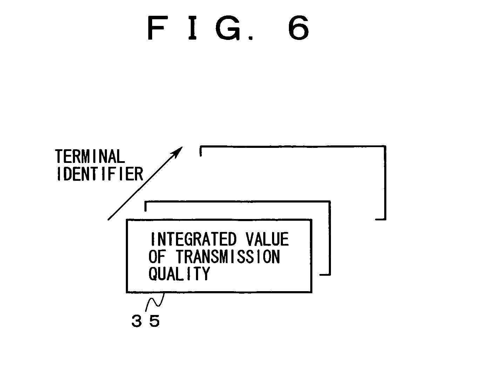

As shown in FIG. 6, in a specific memory area of a main memory (or an external memory) of the processor 44, a transmission quality register 35 constructed by a collection of records which correspond to the terminals 50-1 to 50-N respectively and in each of which an integrated value of the transmission quality described below is stored is arranged.

Further, whenever mobile station information is received from the terminal to which the packet transmission service by the HSDPA mode should be provided, the processor 44 updates a value of a record corresponding to a terminal identifier included in mobile station information to an average value of the value of the record and the transmission quality included in mobile station information among the records of the transmission quality register 35.

Further, the processor 44 specifies a terminal, which satisfies any one of the following conditions, as the specified terminal 50-t.
- A terminal corresponding to a record, among the records of the mobile station information register 61, in which a product (= e · f(G)) of the transmission quality e stored in a corresponding record of the mobile station information register 61 and an increasing function f(Q) of the average value Q stored in a corresponding record of the transmission quality register 35 is a maximum.
- A terminal corresponding to a record, among the records of the statistical information register 62, in which a product (= E · f(Q) = s · f(Q) / e) of a ratio E of statistical information s and transmission quality e stored in corresponding records of the statistical information register 62 and the mobile station information register 61 respectively and the increasing function f(P) of the average value Q stored in a corresponding record of the transmission quality register 35 is a maximum.

That is, the common channel is preferentially allocated to a terminal in which the average value of the transmission qualities notified as mobile station information is large.

Therefore, for a terminal to which the packet transmission service is provided in parallel based on the HSDPA mode, the throughput of the common channel is enhanced without drastically damaging fairness, as compared to the prior art in which the specified terminal is specified regardless of such an average value of the transmission qualities.

Moreover, in the present embodiment, the common channel is preferentially allocated to a terminal in which the average value of the transmission qualities notified as mobile station information is high.

However, the present invention is not limited to such a configuration. For example, the common channel may be preferentially allocated to a terminal in which the average value of the transmission qualities notified as mobile station information is low, thereby enhancing fairness.

### [Sixth Embodiment]

An operation of a sixth embodiment will now be described with reference to FIGS. 8 to 10.

The present embodiment is characterized by an order of a process in which the specified terminal.is specified by the processor 44 provided in the radio base station 40.

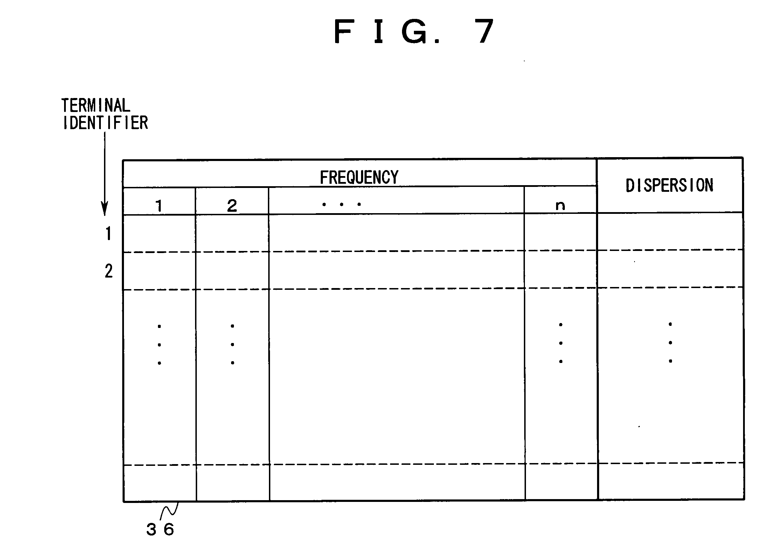

As shown in FIG. 7, in a specific memory area of a main memory (or an external memory) of the processor 44, a transmission quality dispersion register 36 constructed by a collection of records which correspond to the terminals 50-1 to 50-N respectively and each of which is made of fields is arranged.
- Fields of frequency 1 to frequency n which respectively correspond to a plurality of n partial value ranges made by dividing a value range of the transmission quality included in mobile station information described above and in each of which the number of times that the transmission quality belonging to a corresponding partial value range is identified is stored
- A dispersion field in which the dispersion (variation) calculated based on the values of the fields of frequency 1 to frequency n is stored

Further, whenever mobile station information is received from the terminal to which the packet transmission service should be provided based on the HSDPA mode, the processor 44 performs the following processes.
- Specify a record corresponding to a terminal identifier included in mobile station information among the records of the transmission quality dispersion register 36.
- Specify a field, among the fields of frequency 1 to frequency n, corresponding to a partial value range to which the transmission quality included in mobile station information belongs, and increment the value of the field.
- Calculate the dispersion of a dispersed probability density function which is provided as a collection of the values of the fields of frequency 1 to frequency n, and store the dispersion in the dispersion field of the above-mentioned specified record.

Further, the processor 44 specifies a terminal, which satisfies any one of the following conditions, as the specified terminal 50-t.
- A terminal corresponding to a record, among the records of the mobile station information register 61, in which a product (= e · f(B)) of the transmission quality e stored in a corresponding record of the mobile station information register 61 and a decreasing function f(B) of the dispersion B stored in the dispersion field of a corresponding record of the transmission quality dispersion register 36 is a maximum.
- A terminal corresponding to a record, among the records of the statistical information register 62, in which a product (= E · f(B) = s · f(B) / e) of a ratio E of statistical information s and transmission quality e stored in corresponding records of the statistical information register 62 and the mobile station information register 61 respectively and the decreasing function f(B) of the dispersion B stored in the dispersion field of a corresponding record of the transmission quality dispersion register 36 is a maximum.

That is, the common channel is preferentially allocated to a terminal in which the variation in transmission quality notified as mobile station information is small.

Therefore, for a terminal to which the packet transmission service is provided in parallel based on the HSDPA mode, fairness increases, as compared to the prior art in which the specified terminal is specified regardless of the dispersion.

Moreover, in the above-mentioned embodiments, the criterion which is provided based on any one of the maximum CIR method and the PF method and which contributes to select the specified terminal is applied after being weighted with various functions. In such functions, the selection of a function to be applied is not described.

However, such functions may be any functions or a combination of any functions, as long as fairness and the throughput fit respectively preferentially.

Further, in the above-mentioned embodiments, both of the uplink and downlink transmission qualities are made by section of dedicated hardware or software.

However, for both or any one of the transmission qualities, for example, by inferring based on the order of the channel control or by specifying based on both or any one of the modulation scheme which is applied under the adaptive modulation scheme used therefor and the transmission path coding scheme (the error correction coding scheme) which is applied under the hybrid ARQ scheme used therefor, the configuration may be simplified and the existing resource may be effectively utilized.

Further, in the above-mentioned embodiments, the single function which contributes to weighting described above is used.

However, the present invention is not limited to such a configuration. For example, by performing the same weighting with a product of a plurality of functions which are adapted to the system configuration, the traffic distribution, and other events (for example, the events which are identified through the channel control, the call establishment, and the monitoring control), the allocation of the common channel may be optimized.

Further, in the above-mentioned embodiments, the values of the respective records of the bandwidth register 31, the retransmission count register 32, the waiting time register 33, the priority register 34, the transmission quality register 35, the transmission quality dispersion register 36, the mobile station information register 61, and the statistical information register 62 are sequentially added or updated in an order of time series.

However, the present invention is not limited to such a configuration. For example, by applying a moving average method with a desired frequency or applying an exponential smoothing method based on a weight which is updated to a small value in an ascending order of time series, proper scaling or initialization may be made.

Further, in the above-mentioned embodiments, a single channel to which a common dispersion code is allocated based on the CDMA scheme is allocated to a plurality of terminals as the common channel described above on the time axis.

However, the present invention may be applied to a wireless transmission system to which any one of multiple access schemes, other than the CDMA scheme, are applied. Further, the common channel may be constructed by a collection of a plurality of channels.

Further, the present invention is not limited to the above-mentioned embodiments, but various embodiments can be implemented without departing from the scope of the invention. Further, some or all of the elements may be improved.

### Industrial Availability

As described above, in the first and tenth transmission band allocating devices according to the present invention, the band allocation to the terminals is fairly performed as compared to the prior art where the terminal to which the band should be allocated is selected regardless of the previously allocated band as the actual result.

Further, in the fifth and fourteenth transmission band allocating devices according to the present invention, fairness of each of the terminals increases and the minimum QoS of each of the terminal is ensured with high accuracy.

Further, in the twenty-third transmission band allocating device according to the present invention, the integrated value which serves as the criterion for selecting the terminal to which the band should be allocated is calculated by smoothing the precedently calculated integrated value in an order of time series without repetitively initializing, and the integrated value is maintained within the desired finite range.

Further, in the second and eleventh transmission band allocating devices according to the present invention, the throughput of the band as the finite resource is increased and is maintained high, as compared to prior art where the terminal to which the band should be allocated is selected regardless of the number of times of the precedent retransmissions.

Further, in the third and twelfth transmission band allocating devices according to the present invention, the throughput of the band as the finite resource is further increased and is maintained high, as compared to the case where the terminal to which the band should be allocated is selected based on only the number of times of the precedent retransmissions.

Further, in the fourth and thirteenth transmission band allocating devices according to the present invention, the frequency of the retransmission on the band allocated to the terminal is reduced, as compared to the case where the terminal to which the band should be allocated is selected based on only the number of times of the precedent retransmissions or the integrated of the number of times.

Further, in the sixth and fifteenth transmission band allocating devices according to the present invention, fairness of each of the terminals is increased and is maintained high, as compared to the case where the terminal to which the band should be allocated is selected regardless of the priority in the precedent band allocation.

Further, in the seventh and sixteenth transmission band allocating devices according to the present invention, deterioration of service quality and the decrease in throughput due to the extensive change in transmission quality are mitigated, as compared to the case where the terminal to which the band should be allocated is selected regardless of the uplink transmission quality.

Further, in the eighth and seventeenth transmission band allocating devices according to the present invention, the throughput is enhanced without drastically damaging fairness of each of the terminals, as compared to the case where the terminal to which the band should be allocated is selected regardless of the uplink transmission quality.

Further, in the ninth and eighteenth transmission band allocating devices according to the present invention, fairness of each of the terminals is ensured and the throughput is enhanced, as compared to the case where the terminal to which the band should be allocated with reference to only the uplink transmission quality.

Further, in the nineteenth transmission band allocating device according to the present invention, fairness of each of the terminals is maintained high, as compared to the case where the terminal to which the band should be allocated is selected regardless of the uplink transmission quality.

Further, in the twentieth transmission band allocating device according to the present invention, even if the uplink transmission quality changes temporarily or extensively, fairness of each of the terminal is ensured.

Further, in the twenty-first and twenty-second transmission band allocating devices, the configuration is simplified, the cost is decreased, the size is reduced, and reliability is enhanced.

Further, in the twenty-fourth transmission band allocating device according to the present invention, the precedently calculated average value is smoothed in an order of time series without being repetitively initialized, and the average value is maintained within the desired finite range.

Therefore, in the wireless transmission system to which the above-mentioned inventions are applied, the throughput of the transmission band and fairness of each of the terminals are maintained high, general reliability and service quality are enhanced, and the operation cost is reduced.

## Claims

1. A transmission band allocating device comprising:
a transmission quality acquiring section storing for each of terminals downlink transmission quality notified from the terminals;
an actual result storing section storing for each of the terminals an integrated value of bands allocated to the terminals; and
an allocating section preferentially allocating a band to a corresponding terminal among the terminals in a descending order of products of a weight and the transmission qualities stored in the transmission quality acquiring section, the weight decreasing as the integrated value stored in the actual result storing section increases.

2. A transmission band allocating device comprising:
a transmission quality acquiring section storing for each of terminals downlink transmission quality notified from the terminals;
an actual result storing section storing for each of the terminals a number of retransmissions in a transmission unit precedently transmitted to the terminals; and
an allocating section preferentially allocating a band to a corresponding terminal among the terminals in a descending order of products of a weight and the transmission qualities stored in the transmission quality acquiring section, the weight decreasing as the number of the retransmissions stored in the actual result storing section increases.

3. A transmission band allocating device comprising:
a transmission quality acquiring section storing for each of terminals downlink transmission quality notified from the terminals;
an actual result storing section storing for each of the terminals an integrated value of a number of retransmissions in a transmission unit precedently transmitted to the terminals; and
an allocating section preferentially allocating a band to a corresponding terminal among the terminals in a descending order of products of a weight and the transmission qualities stored in the transmission quality acquiring section, the weight decreasing as the integrated value stored in the actual result storing section increases.

4. A transmission band allocating device comprising:
a transmission quality acquiring section storing for each of terminals downlink transmission quality notified from the terminals;
an actual result storing section storing for each of the terminals an average value of a number of retransmissions in a transmission unit precedently transmitted to the terminals; and
an allocating section preferentially allocating a band to a corresponding terminal among the terminals in a descending order of products of a weight and the transmission qualities stored in the transmission quality acquiring section, the weight decreasing as the average value stored in the actual result storing section increases.

5. A transmission band allocating device comprising:
a transmission quality acquiring section storing for each of terminals downlink transmission quality notified from the terminals;
an actual result storing section storing a waiting time for each of the terminals, the waiting time being a time taken for allocating a band precedently; and
an allocating section preferentially allocating a band to a corresponding terminal among the terminals in a descending order of products of a weight and the transmission qualities stored in the transmission quality acquiring section, the weight decreasing as the waiting time stored in the actual result storing section increases.

6. A transmission band allocating device comprising:
a transmission quality acquiring section storing for each of terminals downlink transmission quality notified from the terminals;
an actual result storing section storing for each of the terminals a priority given as an order of precedently allocating a band; and
an allocating section preferentially allocating a band to a corresponding terminal among the terminals in a descending order of products of a weight and the transmission qualities stored in the transmission quality acquiring section, the weight increasing as the priority stored in the actual result storing section decreases.

7. A transmission band allocating device comprising:
a transmission quality acquiring section storing for each of terminals downlink transmission quality notified from the terminals;
an actual result storing section storing for each of the terminals transmission quality histories of uplinks which are formed in bands precedently allocated to the terminals; and
an allocating section preferentially allocating a band to a corresponding terminal among the terminals in a descending order of products of a weight and the transmission qualities stored in the transmission quality acquiring section, the weight decreasing as a variation in transmission quality history stored in the actual result storing section increases.

8. A transmission band allocating device comprising:
a transmission quality acquiring section storing for each of terminals downlink transmission quality notified from the terminals;
an actual result storing section storing for each of the terminals transmission qualities of uplinks which are formed in bands precedently allocated to the terminals; and
an allocating section preferentially allocating a band to a corresponding terminal among the terminals in a descending order of products of a weight and the transmission qualities stored in the transmission quality acquiring section, the weight increasing as the transmission quality stored in the actual result storing section decreases.

9. A transmission band allocating device comprising:
a transmission quality acquiring section storing, for each of terminals, downlink transmission quality notified from the terminals;
an actual result storing section storing, for each of the terminals, an average value of transmission qualities of uplinks which are formed in bands precedently allocated to the terminals; and
an allocating section preferentially allocating a band to a corresponding terminal among the terminals in a descending order of products of a weight and the transmission qualities stored in the transmission quality acquiring section, the weight increasing as the average value stored in the actual result storing section increases.

10. A transmission band allocating device comprising:
a transmission quality acquiring section storing for each of terminals latest transmission qualities of downlinks individually notified from the terminals and an average value of the transmission qualities;
an actual result storing section storing for each of the terminals an integrated value of bands precedently allocated to the terminals; and
an allocating section preferentially allocating a band to a corresponding terminal among the terminals in a descending order of products of a weight and ratios of the transmission qualities and the average value stored in the transmission quality acquiring section, the weight decreasing as the integrated value stored in the actual result storing section increases.

11. A transmission band allocating device comprising:
a transmission quality acquiring section storing for each of terminals latest transmission qualities of downlinks individually notified from the terminals and an average value of the transmission qualities;
an actual result storing section storing for each of the terminals a number of retransmissions in a transmission unit precedently transmitted to the terminals; and
an allocating section preferentially allocating a band to a corresponding terminal among the terminals in a descending order of products of a weight and ratios of the transmission qualities and the average value stored in the transmission quality acquiring section, the weight decreasing as the number of the retransmissions stored in the actual result storing section increases.

12. A transmission band allocating device comprising:
a transmission quality acquiring section storing for each of terminals latest transmission qualities of downlinks individually notified from the terminals and an average value of the transmission qualities;
an actual result storing section storing for each of the terminals an integrated value of a number of retransmissions in a transmission unit precedently transmitted to the terminals; and
an allocating section preferentially allocating a band to a corresponding terminal among the terminals in a descending order of products of a weight and ratios of the transmission qualities and the average value stored in the transmission quality acquiring section, the weight decreasing as the integrated value stored in the actual result storing section increases.

13. A transmission band allocating device comprising:
a transmission quality acquiring section storing for each of terminals latest transmission qualities of downlinks individually notified from the terminals and an average value of the transmission qualities;
an actual result storing section storing for each of the terminals an average value of the number of retransmissions in a transmission unit precedently transmitted to the terminals; and
an allocating section preferentially allocating a band to a corresponding terminal among the terminals in a descending order of products of a weight and ratios of the transmission qualities and the average value stored in the transmission quality acquiring section, the weight decreasing as the average value stored in the actual result storing section increases.

14. A transmission band allocating device comprising:
a transmission quality acquiring section storing for each of terminals latest transmission qualities of downlinks individually notified from the terminals and an average value of the transmission qualities;
an actual result storing section storing a waiting time for each of the terminals, the waiting time being a time taken for precedently allocating a band; and
an allocating section preferentially allocating a band to a corresponding terminal among the terminals in a descending order of products of a weight and ratios of the transmission qualities and the average value stored in the transmission quality acquiring section, the weight increasing as the waiting time stored in the actual result storing section lengthens.

15. A transmission band allocating device comprising:
a transmission quality acquiring section storing for each of terminals latest transmission qualities of downlinks individually notified from the terminals and an average value of the transmission qualities;
an actual result storing section storing for each of terminals a priority given as an order of precedently allocating a band; and
an allocating section preferentially allocating a band to a corresponding terminal among the terminals in a descending order of products of a weight and ratios of the transmission qualities and the average value stored in the transmission quality acquiring section, the weight increasing as the priority stored in the actual result storing section decreases.

16. A transmission band allocating device comprising:
a transmission quality acquiring section storing for each of terminals latest transmission qualities of downlinks individually notified from the terminals and an average value of the transmission qualities;
an actual result storing section storing for each of the terminals transmission quality histories of uplinks which are formed in bands precedently allocated to the terminals; and
an allocating section preferentially allocating a band to a corresponding terminal among the terminals in a descending order of products of a weight and ratios of the transmission qualities and the average value stored in the transmission quality acquiring section, the weight decreasing as a variation in transmission quality history stored in the actual result storing section increases.

17. A transmission band allocating device comprising:
a transmission quality acquiring section storing for each of terminals latest transmission qualities of downlinks individually notified from the terminals and an average value of the transmission qualities;
an actual result storing section storing for each of the terminals transmission qualities of uplinks which are formed in bands precedently allocated to the terminals; and
an allocating section preferentially allocating a band to a corresponding terminal among the terminals in a descending order of products of a weight and ratios of the transmission qualities and the average value stored in the transmission quality acquiring section, the weight increasing as the transmission quality stored in the actual result storing section increases.

18. A transmission band allocating device comprising:
a transmission quality acquiring section storing for each of terminals latest transmission qualities of downlinks individually notified from the terminals and an average value of the transmission qualities;
an actual result storing section storing for each of the terminals an average value of transmission qualities of uplinks which are formed in bands precedently allocated to the terminals; and
an allocating section preferentially allocating a band to a corresponding terminal among the terminals in a descending order of products of a weight and ratios of the transmission qualities and the average value stored in the transmission quality acquiring section, the weight increasing as the average value stored in the actual result storing section increases.

19. A transmission band allocating device comprising:
a transmission quality acquiring section storing for each of terminals latest transmission qualities of downlinks individually notified from the terminals and an average value of the transmission qualities;
an actual result storing section storing for each of the terminals transmission qualities of uplinks which are formed in bands precedently allocated to the terminals; and
an allocating section preferentially allocating a band to a corresponding terminal among the terminals in a descending order of products of a weight and ratios of the transmission qualities and the average value stored in the transmission quality acquiring section, the weight decreasing as the transmission quality stored in the actual result storing section increases.

20. A transmission band allocating device comprising:
a transmission quality acquiring section storing for each of terminals latest transmission qualities of downlinks individually notified from the terminals and an average value of the transmission qualities;
an actual result storing section storing for each of the terminals an average value of transmission qualities of uplinks which are formed in bands precedently allocated to the terminals; and
an allocating section preferentially allocating a band to a corresponding terminal among the terminals in a descending order of products of a weight and ratios of the transmission qualities and the average value stored in the transmission quality acquiring section, the weight decreasing as the average value stored in the actual result storing section increases.

21. The transmission band allocating device according to claim 1, wherein
the downlink transmission qualities are according to both or any one of a modulation scheme and a transmission path coding scheme, the modulation scheme being determined under an adaptive modulation scheme applied to the downlink, the transmission path coding scheme being determined under a hybrid automatic repeat request (ARQ) scheme applied to the downlink.

22. The transmission band allocating device according to claim 7, wherein
the uplink transmission qualities are according to both or any one of a modulation scheme and a transmission path coding scheme, the modulation scheme being determined under an adaptive modulation scheme applied to the uplink, the transmission path coding scheme being determined under a hybrid automatic repeat request (ARQ) scheme applied to the uplink.

23. The transmission band allocating device according to claim 1, wherein
the actual result storing section stores for each of the terminals the integrated value as a product sum of the integrated value and a weight having a large value in an ascending order of time series.

24. The transmission band allocating device according to claim 9, wherein
the actual result storing section stores for each of the terminals the average value as a product sum of the average value and a weight having a large value in an ascending order of time series.
